# EUROPEAN PATENT APPLICATION

(11) **EP 4 841 425 A1**
(43) Date of publication of application: **18.11.2026**
(21) Application number: 25175757.1
(22) Date of filing: 12.05.2025
(51) Int. Cl.: G06F 3/16, H04M 1/60, H04W 12/55, H04W 12/63, H04W 60/04, H04W 76/14, H04W 76/15

(54) **A SYSTEM AND A METHOD OF PROVIDING AN AUDIO FEED FROM A SOURCE TO A HEADSET**

(71) Applicant: BANG & OLUFSEN A/S, 7600 Struer (DK)
(72) Inventor: Magnussen, Magnus Søgaaard, 7600 Struer (DK)
(74) Representative: Inspicos P/S

(57) **Abstract**

A method and assembly communicating pairing information from one headset casing to another headset casing to allow the two corresponding headsets to receive the same audio feed.

## Description

The present invention relates to a method and a system of providing an audio feed from a source to a headset and in particular to a system where two headsets, each related to a separate casing, are brought to receive an audio feed by the casings exchanging pairing information allowing the headsets to receive the audio feed from the source.

The invention relates to a situation where a user having a first headset wants to receive an audio feed already fed to a second headset, such as a headset used by another user.

In a first aspect, the invention relates to a method of providing an audio feed from a first source to a first headset related to a first casing, the method comprising the steps of:
- pairing the first source to a second headset related to a second casing, where the pairing step comprises providing first pairing information to the second casing,
- deriving second pairing information from the first pairing information,
- communicating the second pairing information from the second casing to the first casing,
- deriving third pairing information from the second pairing information, and
- the first headset receiving, using the third pairing information, the audio feed from the source.

In this context, an audio feed may be any sequence of data transmitted over time, continuously, packetized or the like, and which may be converted into audio. Usually, the feed will be a feed or stream of information which is received over time and stored or converted into sound output to a user, such as from a speaker, headset, hearable or the like. Often the feed is transmitted wirelessly such as via Bluetooth, UWB, WiFi, RF, NFC or the like. Optical transmission clearly is also possible. A feed may be of the type usually seen between a mobile phone and a headset.

Often, a feed is protected from third parties listening in on or receiving the feed. Thus, the feed may be encrypted or protected in other manners from outsiders either receiving the feed or from converting it to audio. Encrypting the feed will allow third parties to receive the feed but not to decrypt it and thus obtain the audio.

The audio may be any type of audio, such as music, podcasts, spoken work, radio transmissions, video conference, telephone conversations or other information which may be converted into sound understandable by a person.

The first source may be an entity, such as a monolithic piece of electronics, usually portable, such as a mobile phone, pad, laptop, or the like, which comprises a data storage or a data receiver and means, such as an antenna, for outputting data forming the feed. The source may have a processor for forming and protecting the feed such as for encrypting the data before conversion into and outputting a wireless signal.

A headset typically is hardware capable of being positioned at or in an ear of a person. A headset may be one or more earbuds for engaging an ear or both ears of a person. A headset may be a set of earphones comprising one or two elements for positioning at or over an ear of a person and comprising a band or strap for engaging the user's head for positioning and maintaining the elements vis-à-vis the ear(s). Headsets are often are wireless in the sense that they may receive a wireless audio feed and may have a power storage, often in the form of a rechargeable battery, so that no wires or cables are required to/from the headset during operation. Often a headset also has a receiver for receiving the feed, means for converting the feed to a signal, such as for decrypting the feed, and means for outputting the signal from the converting means and outputting a corresponding sound. The headset of the present method and system need not differ from those known today. For example, two earbuds (left and right) of a headset can be in communication with each other by either a wireless connection or by a wire. The first type is the most common and is called True Wireless. Both types of earbuds are wireless in terms of their connection with the source (e.g., the mobile phone) and/or the casing. Either one or both earbuds can be in wireless connection with the casing or source, but they may regularly switch roles to ensure balanced load on the earbud batteries. Therefore, in terms of communication, the two earbuds can be treated as one common device.

The headset is related to a casing. Often, the casing is capable of receiving the headset therein for protection, charging or the like. The casing may have a power input and/or a power storage and may be able to provide power to the headset when provided in the casing in order to transfer power from the casing's input/power storage to a power storage of the headset. This power transfer may begalvanic, such as if electrical contacts of the casing touch electrical contacts of the headset, or non-galvanic such as when the power is transferred inductively.

The casing is capable of communicating with another casing and also with the source and/or with the headset. This communication may be wired or wirelessly and may be performed using any desired standard, such as the Bluetooth standard, WiFi, NFC or the like.

A casing may be configured to communicate with the headset related thereto. This communication may be, when required, intermittently or continuously. In one situation, the audio feed may be fed from the source to the headset via the casing, so that the casing and not the headset is communicating with the source. In this situation, the casing will already have the pairing information as it is communicating with the source. Alternatively, the headset may communicate with the source and may be able to forward the required pairing information from that communication to the casing.

The method comprises the step of pairing the first source to a second headset related to a second casing, where the pairing step comprises providing first pairing information to the second casing. A pairing between two components communicating with each other may be an exchange of information required in order for the two components to exchange data, such as an audio feed, and make use of the data. The data may be encrypted or made unintelligible in any other manner and may be decrypted or converted into a desired format using information included in the pairing information so that the data may be output by one component and received by another, non-paired, component which will not, easily at least, be able to derive the information in the data.

Then, the communication of the audio feed may comprise the source deriving a signal to be output from the pairing information and the audio feed, and the headset or casing may receive the output signal and derive therefrom the audio feed using the pairing information.

It is noted that when the signal output is encrypted, the encryption may be based on a symmetric key which may form part of the pairing information. Alternatively, asymmetric encryption may be used where the source may encrypt the audio feed with the public key of the headset or casing, where the headset/casing decrypts the signal using its secret key. In this situation, the pairing information may comprise the public key and not that by which the signal is encrypted.

When pairing a source and a headset/casing, pairing information is generated which may be unique to this paired pair or at least which will often differ from pairing information from other paired pairs of a source and a headset/casing. Pairing information may comprise both information on how to decrypt the information as well as a channel number or the like singling out the information from this source from information from other sources. As a source may be paired simultaneously to different receivers, the channel number may even vary from the same source. Having both types of information allows the casing/headset to receive the correct feed from the correct source - and to decrypt it or make it understandable in any other required manner.

The source is paired with the second headset/casing based on first pairing information.

The method comprises the step of communicating second pairing information from the second casing to the first casing and basically enabling thereby the first headset to receive the audio feed.

In a simple embodiment, the pairing information may be fed to any component, such as any casing and/or headset which is desired to receive the audio feed. This pairing information may be the same, so that all components receiving the pairing information will be able to receive the signal from the source and generate the audio feed. In this situation, the first, second and third pairing information may be the same information, so that the steps of deriving the second and third pairing information will be void.

In other situations, the pairing information of a pairing of a source to one headset/casing may be desired or required altered for it to be useful between the source and another headset/casing, such as if the pairing information comprises information about an identity, address, type, model or the like of the individual headset/casing. Thus, the first or second casing may adapt the pairing information, relative to the first pairing information, in order for it to be suitable for a pairing between the source and this particular casing or headset. In this situation, the second pairing information may be identical to the first pairing information or may be altered in any manner. At least a portion of the first pairing information may be required in the third pairing information so that this portion may form part also of the second pairing information.

The second and third pairing information may be identical, or the third pairing information may be provided to be suitable for the first headset and/or casing to receive the audio feed from the source. Thus, if the pairing information requires information particular to the headset/casing, this may form part of the third pairing information.

As a result, the first headset is capable of receiving, using the third pairing information, the audio feed from the source. As mentioned above, the audio feed may be received directly from the source or via the first casing.

In one embodiment, the step of communicating the second pairing information from the second casing to the first casing comprises activating a user interface on the first casing and a user interface on the second casing. It may be desired to not provide a particular or a separate pairing between the first and second casings so that the information output by the second casing may be unprotected and merely broadcast. In this situation, it may be desired to protect this information by preparing the first and second casings to receive and output, respectively, the information. This preparation may be the activating of the user interfaces, such as pushing a push button on each casing, entering a voice command, such as via the respective headsets, or the like. The activations may be desired simultaneously, such as where both user interfaces may be activated at the same point in time, or the activations may be desired within a maximum period of time, such as within 5 seconds, such as within 2 seconds, such as within 1 second. Requiring a timing relationship between the activations of the two casings reduces the risk of a third, unrelated casing having its user interface activated and thus receiving the pairing information and thus being enabled to receive the audio feed. Naturally, other manners than pushing push buttons may trigger the transferring of the paring information, such as the mere positioning of the casings within a predetermined distance for a predetermined period of time (such as those described above), or tapping the casings together, would be possible.

In addition or alternatively, the step of communicating the second pairing information from the second casing to the first casing may comprise communicating the second pairing information only if a distance between the first and second casings is below a maximum distance. Naturally, a distance may be estimated in many manners such as from a strength of a received signal. If the distance exceeds a limit, the strength of the received signal will be below a limit, whereby the first casing may ignore the signal. Alternatively, the information output by the second casing may have a low signal strength, such as is seen by contactless payment using NFC, so that only first casings within a maximum distance, such as a maximum distance of 2m, such as of 1m, such as of 50cm, such as of 30cm, such as of 10cm, may be capable of receiving the information. In this manner, the information may be broadcast with no protection (encryption or the like) without the risk of undesired third parties intercepting the information.

The casings may communicate on any protocol, such as a wireless protocol, such as Bluetooth, UWB, BLE, NFC or the like.

As mentioned, the first headset may receive the audio feed directly from the source. This is possible when the method comprises the step of communicating the third pairing information from the first casing to the first headset. Alternatively, the first headset may receive the audio feed via the first casing which then receives the audio feed from the source based on the second or third pairing information which as described above may or may not be identical to the first pairing information.

An interesting embodiment further comprises the steps of:
- pairing a second source to the first headset or the first casing, where this pairing step comprises providing fourth pairing information to the first casing,
- deriving fifth pairing information from the fourth pairing information,
- during the step of communicating the second pairing information from the second casing to the first casing, communicating the fifth pairing information from the first casing to the second casing,
- deriving sixth pairing information from the fifth pairing information, and
- the second headset receiving, using the fifth pairing information, the second audio feed from the second source.

As is the case with the first, second and third pairing information, the fourth, fifth and sixth pairing information may be the same, so that the deriving steps will be void. Alternatively, the pairing information may be adapted from the fourth pairing information being adapted to the first casing and/or headset to the sixth pairing information adapted for the second casing/headset for receiving the second feed.

In this embodiment, the two casings exchange both pairing information so that not only is the second casing/headset enabled to receive the first feed but the first casing/headset will be capable of receiving the second feed.

In this context, pairing information relating to both feeds is now available in both sets of casing/headset. Then, a number of manners of operation is possible.

In one situation, any casing/headset may shift between providing the first and the second feeds from the first and second, respectively, source, irrespective of the other casing/headset. This transition between feeds may be controlled by the user interface of the casing, such as a push of a push button or the entering of a voice command into the headset.

In this situation, "during" may mean simultaneously or during a step where the second and fifth pairing information is exchanged in a sequential manner so that the communication step comprises transfer of both information. "during" may mean that the casings will transfer both **pairing** information without requiring e.g. further user interaction. The casings may have simple transceivers which are not able to receive and transmit at the same time.

Alternatively, the casings/headsets may be controlled to provide the same feed (the first or second feed). Then, if the feed provided is stopped, a feed from the other source may be received by both casings/headsets. This shift may be automatic and triggered by the initial feed stopping. Alternatively, the shift may be triggered by operation of the user interface of one of or any of the casings or headsets.

A second aspect of the invention relates to an assembly for outputting sound corresponding to an audio feed, the assembly comprising:
- a source of the audio feed,
- a first casing,
- a first headset related to the first casing,
- a second casing, and
- a second headset related to the second casing,
wherein:
the second headset is configured to communicate with the source based on first pairing information,
the second casing is configured to:
   ∘ receive the first pairing information,
   ∘ derive second pairing information from the first pairing information and
   ∘ output the second pairing information to the first casing,
the first casing is configured to:
   ∘ receive the second pairing information from the second casing,
   ∘ derive third pairing information from the second pairing information and
   ∘ output the third pairing information to the first headset, and
the first headset is configured to:
   - receive the third pairing information from the first casing and
   - receive, based on the third pairing information, the audio feed from the source.

Clearly, all embodiments, situations and considerations made in relation to the first aspect are equally relevant to the second aspect of the invention.

Thus, the source, the audio feed, the first and second casings and the first and second headsets may be as described above.

Again, the second headset is configured to communicate with the source, directly or via the second casing, based on first pairing information.

The second casing is configured to receive the first pairing information, derive second pairing information from the first pairing information and output the second pairing information to the first casing, where the first and second pairing information may be the same, as explained above, so that the deriving will be void.

Also, as described, the first casing is configured to receive the second pairing information from the second casing, derive third pairing information from the second pairing information and output the third pairing information to the first headset which is then configured to receive the third pairing information from the first casing and receive, based on the third pairing information, the audio feed from the source.

Thus, according to the second aspect of the invention, the first headset is configured to receive the pairing information and thus receive the audio feed from the source.

A third aspect of the invention relates to an assembly for outputting sound corresponding to an audio feed, the assembly comprising:
- a source of the audio feed,
- a first casing,
- a first headset related to the first casing,
- a second casing, and
- a second headset related to the second casing,
wherein:
the second headset is configured to communicate with the source based on first pairing information,
**the second** casing is configured to:
   ∘ receive the first pairing information,
   ∘ derive second pairing information from the first pairing information and
   ∘ output the second pairing information to the first casing,
the first casing is configured to:
   ∘ receive the second pairing information from the second casing,
   ∘ derive third pairing information from the second pairing information
   ∘ receive, based on the third pairing information, the audio feed from the source and
   ∘ output the audio feed to the first headset,
the first headset is configured to receive the audio feed from the first casing.

Clearly, all embodiments, situations and considerations made in relation to the first and second aspects are equally relevant to the third aspect of the invention.

Again, the audio feed, the source, the first casing, the first headset related to the first casing, the second casing, and the second headset related to the second casing may be as described above where the second headset is configured to communicate with the source, directly or via the second casing, based on first pairing information.

Again, the second casing is configured to receive the first pairing information, derive second pairing information from the first pairing information and output the second pairing information to the first casing.

In this aspect, the first casing is configured to receive the second pairing information from the second casing, derive third pairing information from the second pairing information, receive, based on the third pairing information, the audio feed from the source and output the audio feed to the first headset, where the first headset is configured to receive the audio feed from the first casing.

Then, in this aspect, the first casing is configured to receive the audio feed and forward this to the first headset such as when individually paired with the first headset.

**In one embodiment** the first casing comprises a first user interface, the second casing comprises a second user interface, and the second casing is configured to output the second pairing information when the first and second user interfaces are activated. In one situation, the second casing is configured to output the second pairing information only if the first and second user interfaces are activated within a predetermined time period.

In one embodiment, the first casing comprises a first user interface, the second casing comprises a second user interface, and the first casing is configured to receive the second pairing information when the first and second user interfaces are activated. The first casing may be configured to receive the second pairing information only if the first and second user interfaces are activated within a predetermined time period.

In one embodiment, the first casing comprises a first user interface, the second casing comprises a second user interface, and the second casing is configured to output the second pairing information only if a distance between the first and second casings is below a maximum distance.

In that or another embodiment, the first casing comprises a first user interface, the second casing comprises a second user interface, and the first casing is configured to receive the second pairing information only if a distance between the first and second casings is below a maximum distance.

As mentioned above, the assembly may further comprise a second source providing a second feed. Then, in one situation:
the first headset is configured to communicate with the second source based on fourth pairing information,
the first casing is configured to:
   ∘ receive the fourth pairing information,
   ∘ derive fifth pairing information from the fourth pairing information and
   ∘ output the fifth pairing information to the second casing,
the second casing is configured to:
   ∘ receive the fifth pairing information from the first casing,
   ∘ derive sixth pairing information from the fifth pairing information and
   ∘ output the sixth pairing information to the second headset, and
the second headset is configured to:
   - receive the sixth pairing information from the second casing and
   - receive, based on the sixth pairing information, the second audio feed from the second source.

Thus, the fifth pairing information, which may be identical to the fourth pairing information, is exchanged, such as in the same step as the exchange of the second pairing information, so that the second headset may be able to receive the second feed from the second source.

As described above, once the pairing information has been exchanged, a user interface of the headset or casing may be used for selecting which feed to receive if both sources output feeds.

In another situation:
the first headset is configured to communicate with the second source based on fourth pairing information,
the first casing is configured to:
   ∘ receive the fourth pairing information,
   ∘ derive fifth pairing information from the fourth pairing information and
   ∘ output the fifth pairing information to the second casing,
the second casing is configured to:
   ∘ receive the fifth pairing information from the first casing,
   ∘ derive sixth pairing information from the second pairing information,
   ∘ receive, based on the sixth pairing information, the second audio feed from the second source and
   ∘ output the second audio feed to the second headset,
the second headset is configured to receive the second audio feed from the second casing.

Thus, similarly to above, the second headset is now able to output the second feed where, in this situation, it receives the feed from the second casing receiving it from the second source.

In the following, preferred embodiments of the invention will be described with reference to the drawing in which:
- Figure 1 illustrates a prior art audio feed from a source to a headset and
- Figure 2 illustrates a system according to the invention and operation thereof

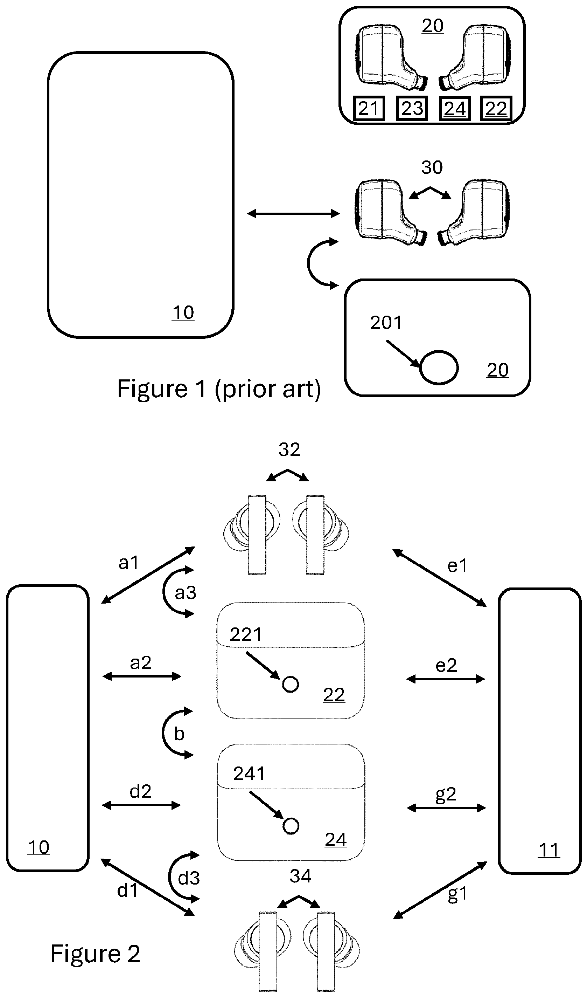

In figure 1, a source 10, such as a mobile phone, a tablet, a pad, a PC, a TV, a stereo system, a remote assistant (a.o. Alexa), or the like, feeds an audio feed (straight arrow) to a headset 30 which outputs corresponding audio when positioned in the ears of a person.

The headset 30 fits in a casing 20 in which the headset 30 may be protected and charged. Charging takes place via electrodes 21 and 22 and from a battery 23. A controller 24 may control operation of the casing 20.

Casings 20 exist which are capable of receiving an audio feed via a cable and feed this (curved arrow) to the headset 30.

Casings 20 exist which have a push button 201 or the like for initiating e.g. pairing, streaming or the like.

The B&W PI7 case, for example, may be paired with not only its own earbuds but also a second headset to which the casing may communicate (while the earbuds are provided in that casing).

In figure 2, the source 10 initially communicates (arrow a1) with a second headset 32 to feed an audio signal or feed thereto in order for the second headset 32 to output a corresponding sound.

The second headset 32 is related to a second casing 22 in which the second headset 32 may be stored, charged or the like. The second casing 22 has a second push button 221 and may communicate (arrow a3) with the second headset 32 to feed the audio signal instead of directly from the source 10 (arrow a1). When the audio signal is fed via the casing 22, the casing receives the audio feed from the source 10 (arrow a2).

In order to receive the audio feed from the source 10, the second headset 32 needs pairing information, such as an encryption key in order to communicate with the source 10 and receive the audio feed. This pairing information may be derived directly from the source 10 (arrow a1) in a pairing mode or via the casing (and thus arrows a2 and a3) in a pairing situation. A pairing situation is seen when the casing exchanges pairing information with another casing, a source, a headset or the like. When hardware exchanges pairing information or is ready to do so, it may be in a pairing mode. A pairing mode may be a mode into which the hardware may be put by e.g. a user input, such as pushing a button or operating a touch sensitive portion of the hardware.

Clearly, the audio feed may instead be fed from the source 10 to the second casing 22 (arrow a2), which is then paired to the source 10, and from the second casing 22 to the second headset 32 (arrow a3) which may be paired to the second casing 22.

A first headset 34 is also seen related to a first casing 24 having a first push button 241. The first and second headsets 32/34 may be of the same type, brand, version or the like, or not.

In order for the first headset 34 to be able to receive (arrow d1) the same audio feed from the source 10, the first headset 34 requires suitable pairing information, such as that provided in the second headset 32 receiving the audio feed.

The first and second casings 22/24 are configured to communicate with each other (arrow b) when brought to within a maximum distance and when the push buttons 221/241 are pushed/operated at the same time. This communication causes pairing information to be fed from the second casing 22 to the first casing 24 from which this pairing information is fed (arrow d3 to the first headset 34 allowing the first headset 34 to receive the audio stream (arrow d1) from the source 10.

Alternatively, the first casing 24 may receive the audio feed (arrow d2) from the source 10 based on the received pairing information, where the audio feed is then fed to the first headset 34 (arrow d3) via a connection between the first casing 24 and the first headset 34.

When the pairing information is the same for the feeding of the audio feed from the source 10 to the casings 22 and 24 and/or the headsets 32 and 34, the source 10 may not receive information that the first headset 34 now is also receiving the audio feed.

In one embodiment, the method may be added the reverse functionality, i.e. that the first headset 34 may receive a second feed from a second source 11 with which the first headset 34 or first casing 24 is paired.

Thus, the first headset 34 and/or the first casing 24 may be paired with a second source 11 to receive a second feed (arrows g1 or g2) based on fourth pairing information. If the first headset 34 is paired with the second source 11 it may feed the pairing information to the first casing 24 (arrow d3).

Again, the pairing information may be exchanged between the casings 24 and 22, now from the first casing 24 to the second casing 22 (arrow b) from which it may form basis for the second casing 22 or the second headset 32 receiving the second feed from second source 11 (arrows e1 and e2). As mentioned above, the pairing information of the first casing may be identical to that used in the second headset/casing, or it may be altered in the first and/or second casings in order to be useful for the second casing/headset for receiving the second feed.

When the exchange of pairing information has been initiated, in this embodiment by activation of the push buttons 221, 241, a feed received by the first casing/headset may be received by the second casing/headset - or a feed received by the second casing/headset may be received by the first casing/headset. Then, the feed already fed from an initial source of the sources and received by one of the first/second casing/headset will be received also by the other casing/headset. If the other source outputs a feed, the providing of the initial source's feed will not be interrupted, but once the initial source stops outputting the feed, the feed from the other source will be fed to both the first and the second casing/headset, as the pairing information already has been exchanged.

It is noted that different pairs of a source and a casing/headset will usually have a different pairing information, so that a shift in feed due to a shift in source will require a shift in the pairing information used by the headset/casing for receiving the other feed.

## Claims

1. A method of providing a first audio feed from a first source to a first headset related to a first casing, the method comprising the steps of:
- pairing the first source to a second headset or a second casing related to the second headset, where the pairing step comprises providing first pairing information to the second casing,
- deriving second pairing information from the first pairing information,
- communicating the second pairing information from the second casing to the first casing,
- deriving third pairing information from the second pairing information, and
- the first headset receiving, using the third pairing information, the first audio feed from the first source.

2. A method according to claim 1, wherein the step of communicating the second pairing information from the second casing to the first casing comprises activating a user interface on the first casing and a user interface on the second casing.

3. A method according to claim 1 or 2, wherein the step of communicating the second pairing information from the second casing to the first casing comprises communicating the second pairing information only if a distance between the first and second casings is below a maximum distance.

4. A method according to any of the preceding claims, further comprising the step of communicating the third pairing information from the first casing to the first headset, and wherein the step of the first headset receiving the first audio feed comprises the first headset receiving the first audio feed directly from the first source.

5. A method according to claims 1-3, wherein the first headset receives the first audio feed via the first casing.

6. **A method** according to any of the preceding claims, further comprising the steps of:
- pairing a second source to the first headset or the first casing, where this pairing step comprises providing fourth pairing information to the first casing,
- deriving fifth pairing information from the fourth pairing information,
- during the step of communicating the second pairing information from the second casing to the first casing, communicating the fifth pairing information from the first casing to the second casing,
- deriving sixth pairing information from the fifth pairing information, and
- the second headset receiving, using the fifth pairing information, the second audio feed from the second source.

7. An assembly for outputting sound corresponding to a first audio feed, the assembly comprising:
• a first source of the first audio feed,
• a first casing,
• a first headset related to the first casing,
• a second casing, and
• a second headset related to the second casing,
wherein:
the second headset is configured to communicate with the first source based on first pairing information,
the second casing is configured to:
∘ receive the first pairing information,
∘ derive second pairing information from the first pairing information and
∘ output the second pairing information to the first casing,
the first casing is configured to:
∘ receive the second pairing information from the second casing,
∘ derive third pairing information from the second pairing information and
∘ output the third pairing information to the first headset, and
the first headset is configured to:
- receive the third pairing information from the first casing and
- receive, based on the third pairing information, the first audio feed from the first source.

8. An assembly for outputting sound corresponding to a first audio feed, the assembly comprising:
• a first source of the first audio feed,
• a first casing,
• a first headset related to the first casing,
• a second casing, and
• a second headset related to the second casing,
wherein:
the second headset is configured to communicate with the first source based on first pairing information,
the second casing is configured to:
∘ receive the first pairing information,
∘ derive second pairing information from the first pairing information and
∘ output the second pairing information to the first casing,
the first casing is configured to:
∘ receive the second pairing information from the second casing,
∘ derive third pairing information from the second pairing information,
∘ receive, based on the third pairing information, the first audio feed from the first source and
∘ output the first audio feed to the first headset,
the first headset is configured to receive the first audio feed from the first casing.

9. An assembly according to claim 7 or 8, wherein:
- the first casing comprises a first user interface,
- the second casing comprises a second user interface, and
the second casing is configured to output the second pairing information when the first and second user interfaces are activated.

10. An assembly according to claim 8, wherein the second casing is configured to output the second pairing information only if the first and second user interfaces are activated within a predetermined time period.

11. An assembly according to any of claims 7-10, wherein:
- the first casing comprises a first user interface,
- the second casing comprises a second user interface, and
the first casing is configured to receive the second pairing information when the first and second user interfaces are activated.

12. An assembly according to claim 11, wherein the first casing is configured to receive the second pairing information only if the first and second user interfaces are activated within a predetermined time period.

13. An assembly according to any of claims 7-12, wherein:
- the first casing comprises a first user interface,
- the second casing comprises a second user interface, and
the second casing is configured to output the second pairing information only if a distance between the first and second casings is below a maximum distance.

14. An assembly according to any of claims 7-13, wherein:
- **the first** casing comprises a first user interface,
- the second casing comprises a second user interface, and
the first casing is configured to receive the second pairing information only if a distance between the first and second casings is below a maximum distance.

15. An assembly according to any of claims 7-14, further comprising a second source, wherein:
the first headset is configured to communicate with the second source based on fourth pairing information,
the first casing is configured to:
∘ receive the fourth pairing information,
∘ derive fifth pairing information from the fourth pairing information and
∘ output the fifth pairing information to the second casing,
the second casing is configured to:
∘ receive the fifth pairing information from the first casing,
∘ derive sixth pairing information from the fifth pairing information and
∘ output the sixth pairing information to the second headset, and
the second headset is configured to:
- receive the sixth pairing information from the second casing and
- receive, based on the sixth pairing information, the second audio feed from the second source.

16. An assembly according to any of claims 7-14, further comprising a second source, wherein:
the first headset is configured to communicate with the second source based on fourth pairing information,
the first casing is configured to:
∘ receive the fourth pairing information,
∘ derive fifth pairing information from the fourth pairing information and
∘ output the fifth pairing information to the second casing,
the second casing is configured to:
∘ receive the fifth pairing information from the first casing,
∘ derive sixth pairing information from the second pairing information,
∘ receive, based on the sixth pairing information, the second audio feed from the second source and
∘ output the second audio feed to the second headset,
the second headset is configured to receive the second audio feed from the second casing.
